# EUROPEAN PATENT APPLICATION

(11) **EP 2 866 521 A1**
(43) Date of publication of application: **29.04.2015**
(21) Application number: 14159318.6
(22) Date of filing: 13.03.2014
(51) Int. Cl.: H05B 33/08

(54) **Power supply device, luminaire, and lighting system**

(30) Priority: 25.09.2013 JP 2013199031
(71) Applicant: Toshiba Lighting & Technology Corporation, Yokosuka-shi Kanagawa 237-8510 (JP)
(72) Inventor: Otake, Hirokazu, Kanagawa 237-8510 (JP); Kitamura, Noriyuki, Kanagawa 237-8510 (JP); Kato, Go, Kanagawa 237-8510 (JP); Nakamura, Hiroto, Kanagawa 237-8510 (JP)
(74) Representative: Willquist, Sofia Ellinor

(57) **Abstract**

According to one embodiment, a power supply device (1, 41, 44, 48) includes a terminal (5) connected to an output of a dimmer (3, 28, 29) connected to an alternating-current power supply (2), a rectifier circuit (10), a switching circuit (17, 42, 45, 49) including an inductor (19), a switching element (21) connected to the inductor (19) in series, and a rectifying element (20), one end of which is connected between the inductor (19) and the switching element (21), and configured to change the switching element (21) to an ON state to feed an output current of the rectifier circuit (10) to the inductor (19), after the dimmer (3, 28) changes from a non-conduction state to a conduction state, when the dimmer (3, 28, 29) is a dimmer (3, 28) of a phase control type, and, configured to change the switching element (21) to the ON state to feed the output current of the rectifier circuit (10) to the inductor (19), after the dimmer (3, 29) changes from the conduction state to the non-conduction state, when the dimmer (3, 28, 29) is a dimmer (3, 29) of an anti-phase control type, , and a DC-DC converter (18) configured to convert the output voltage of the switching circuit (17, 42, 45, 49).

## Description

### FIELD

Embodiments described herein relates generally to a power supply device, a luminaire, and a lighting system.

### BACKGROUND

In recent years, in a luminaire, as an illumination light source, an incandescent lamp and a fluorescent lamp are replaced with energy-saving and long-life light sources such as a light-emitting diode (LED). For example, new illumination light sources such as an EL (Electro-Luminescence) and an organic light-emitting diode are also developed.

As a dimmer of the incandescent lamp, there is a dimmer of a system for controlling a phase in which a switching element such as a triac is turned on. As such a dimmer, there is a dimmer of a phase control system (a leading edge type) that is cut off immediately after a zero cross of an alternating-current voltage and conducts in a specific phase and a dimmer of an anti-phase control system (a trailing edge type) that conducts immediately after a zero cross of an alternating-current voltage and is cut off in a specific phase. It is desirable that an illumination light source such as an LED can be dimmed by these dimmers.

### BRIEF DESCRIPTION OF THE DRAWINGS

FIG. 1 is a circuit diagram illustrating a luminaire including a power supply device according to a first embodiment;
FIG. 2 is a circuit diagram illustrating a dimmer subjected to phase control;
FIGS. 3A to 3D are waveform charts for describing the operation of the dimmer subjected to the phase control;
FIG. 4 is a circuit diagram illustrating dimmer subjected to anti-phase control;
FIGS. 5A to 5C are waveform charts for describing the operation of the dimmer subjected to the anti-phase control;
FIGS. 6A to 6E are waveform charts for describing the operation of the first embodiment performed when the dimmer subjected to the phase control is used;
FIGS. 7A to 7E are waveform charts for describing the operation of the first embodiment performed when the dimmer subjected to the anti-phase control is used;
FIG. 8 is a circuit diagram illustrating a power supply device according to a second embodiment;
FIG. 9 is a circuit diagram illustrating a power supply device according to a third embodiment;
FIG. 10 is a circuit diagram illustrating a power supply device according to a fourth embodiment; and
FIGS. 11A to 11C are waveform charts for describing the operation of the fourth embodiment performed when a dimmer subjected to anti-phase control is used.

### DETAILED DESCRIPTION

In general, according to one embodiment, a power supply device includes a terminal connected to an output of a dimmer connected to an alternating-current power supply, a rectifier circuit, a switching circuit, and a DC-DC converter. The switching circuit includes an inductor, a switching element connected to the inductor in series, and a first rectifying element. One end of the switching circuit is connected between the inductor and the switching element, and is configured to change the switching element to an ON state to feed an output current of the rectifier circuit to the inductor, after the dimmer changes from a non-conduction state to a conduction state, when the dimmer is a dimmer of a phase control type, and the switching circuit is configured to change the switching element to the ON state to feed the output current of the rectifier circuit to the inductor, after the dimmer changes from the conduction state to the non-conduction state, when the dimmer is a dimmer of an anti-phase control type. The DC-DC converter is configured to convert the output voltage of the switching circuit.

According to another embodiment, there is provided a luminaire including a power supply device and a lighting load. The power supply device includes a terminal, a rectifier circuit, a switching circuit, and a DC-DC converter. The terminal is connected to an output side of a dimmer connected to an alternating-current power supply. The switching includes an inductor, a switching element connected to the inductor in series, and a first rectifying element, one end of which is connected between the inductor and the switching element. When the dimmer is a dimmer of a phase control type, after the dimmer changes from a non-conduction state to a conduction state, the switching circuit changes the switching element to an ON state to feed an output current of the rectifier circuit to the inductor. When the dimmer is a dimmer of an anti-phase control type, after the dimmer changes from the non-conduction state to the conduction state, the switching circuit changes the switching element to the ON state to feed the output current of the rectifier circuit to the inductor. The DC-DC converter converts the output voltage of the switching circuit. The lighting load is supplied with electric power from the power supply device.

According to still another embodiment, there is provided a lighting system including a luminaire and a dimmer. The luminaire includes a power supply device and a lighting load. The power supply device includes a terminal, a rectifier circuit, a switching circuit, and a DC-DC converter. The terminal is connected to an output side of a dimmer connected to an alternating-current power supply. The switching circuit includes an inductor, a switching element connected to the inductor in series, and a first rectifying element, one end of which is connected between the inductor and the switching element. When the dimmer is a dimmer of a phase control type, after the dimmer changes from a non-conduction state to a conduction state, the switching circuit changes the switching element to an ON state to feed an output current of the rectifier circuit to the inductor. When the dimmer is a dimmer of an anti-phase control type, after the dimmer changes from the non-conduction state to the conduction state, the switching circuit changes the switching element to the ON state to feed the output current of the rectifier circuit to the inductor. The DC-DC converter converts the output voltage of the switching circuit. The lighting load is supplied with electric power from the power supply device. The dimmer supplies a phase-controlled alternating-current voltage to the power supply device.

Various embodiments will be described hereinafter with reference to the accompanying drawings. In the following explanation, the same members are denoted by the same reference numerals and signs. Explanation of the members once described is omitted as appropriate.

### First Embodiment

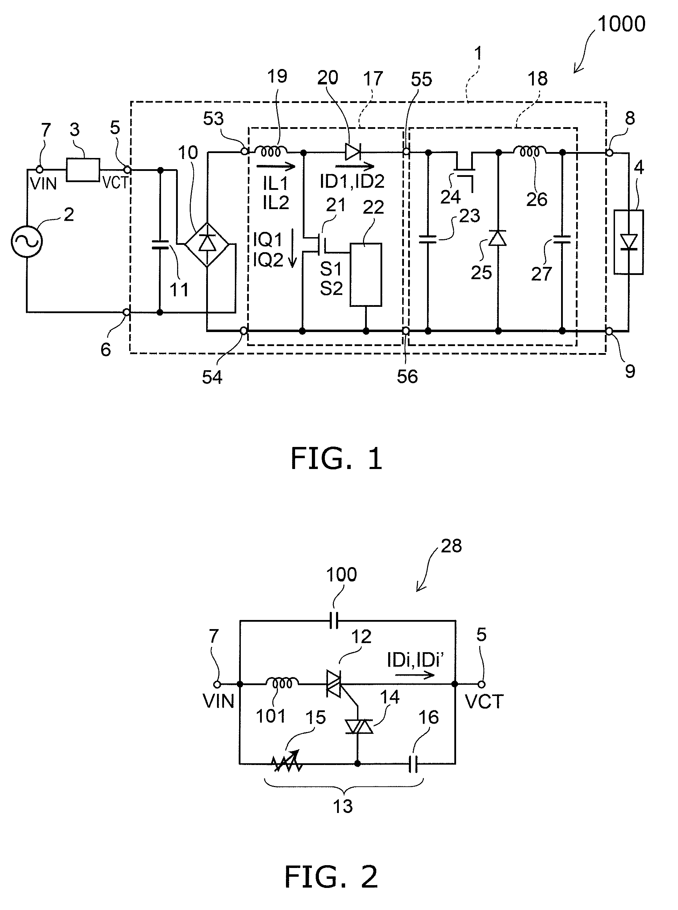

FIG. 1 is a circuit diagram illustrating a luminaire including a power supply device according to a first embodiment. A power supply device 1 includes an input filter capacitor 11, a rectifier circuit 10, a switching circuit 17, and a DC-DC converter 18. The power supply device 1 receives an output voltage VCT supplied from an alternating-current power supply 2 via a dimmer 3 and supplies electric power to a lighting load 4.

The lighting load 4 includes an illumination light source such as a light-emitting diode (LED). The alternating-current power supply 2 is a commercial power supply of, for example, 100 volts. In FIG. 1, as the dimmer 3, a circuit inserted in series between one terminals 5 and 7 of a pair of power supply lines for supplying a power supply voltage VIN is illustrated. However, the dimmer 3 may be other circuits.

As the dimmer 3, there are a system of phase control (a leading edge type) in which the dimmer 3 is cut off immediately after a zero cross of an alternating-current voltage and conducts in a specific phase and a system of anti-phase control (a trailing edge type) in which the dimmer 3 conducts immediately after a zero cross of an alternating-current voltage and is cut off in a specific phase.

The dimmer subjected to phase control has a simple circuit configuration and can treat a relatively large power load. However, when a triac is used, a light load operation is difficult. The dimmer tends to fall into an unstable operation when a so-called power supply dip occurs in which a power supply voltage temporarily drops. When a capacitative load is connected to the dimmer, since a rush current occurs, the dimmer is incompatible with the capacitative load.

The dimmer subjected to anti-phase control is operable even with a light load. Even when a capacitative load is connected to the dimmer, a rush current does not occur. Even when a power supply dip occurs, the dimmer stably operates. However, a circuit configuration is relatively complicated. Since the temperature of the dimmer tends to rise, the dimmer is unsuitable for a heavy load. When an inductive load is connected to the dimmer, for example, a surge occurs.

If a low-impedance element such as an incandescent lamp is connected as a load of the dimmer, since an electric current flows in all phases of an alternating-current voltage, the dimmer does not malfunction. However, when a power supply device that lights an illumination light source such as an LED is connected as the load of the dimmer, input impedance changes according to a phase of an alternating-current voltage. Therefore, current fluctuation of a line is large. The dimmer is likely to malfunction. It is also likely that an alternating-current waveform after passing through the dimmer is distorted by the influence of the input filter capacitor 11.

FIG. 2 is a circuit diagram illustrating the dimmer subjected to the phase control.

A dimmer 28 includes a triac 12 inserted into a power supply line in series, an inductor 101 connected to the triac 12 in series, a phase circuit 13 connected to a series circuit of the triac 12 and the inductor 101 in parallel, a diac 14 connected between a gate of the triac 12 and a phase circuit 13, and a capacitor 100 connected to a series circuit of the trial 12 and the inductor 101 in series.

The triac 12 is usually in a cut-off state between main electrodes and conducts when a pulse signal is input to the gate. The triac 12 can feed an electric current in both directions in which the alternating-current power supply voltage VIN has positive polarity and has negative polarity.

The phase circuit 13 includes a variable resistor 15 and a timing capacitor 16 and generates a phase-delayed voltage at both ends of the timing capacitor 16. When a resistance value of the variable resistor 15 is changed, a time constant changes and a delay time changes.

The diac 14 generates a pulse voltage when a voltage charged in a capacitor of the phase circuit 13 exceeds a fixed value and causes the triac 12 to conduct.

By changing the time constant of the phase circuit 13 and controlling timing when the diac 14 generates a pulse, it is possible to adjust timing when the triac 12 conducts. With this function, the dimmer 28 can be subjected to the phase control.

The inductor 101 is provided to reduce a change ratio dIDi/dt of an electric current IDi of the triac 12 to prevent breakage of the triac 12. The capacitor 100 is provided as a capacitor for a filter for preventing occurrence of noise due to the inductor 101.

Problems that occur when the LED is used as the illumination light source are described.

To cause the triac 12 to conduct, it is necessary to feed an electric current to the phase circuit 13 and cause the diac 14 to conduct. In other words, it is necessary to supply an electric current to the dimmer 3. When an incandescent lamp is used as the load of the dimmer 3, since the impedance of the incandescent lamp is low, an electric current flows through a route of the alternating-current power supply 2, the dimmer 3, and the incandescent lamp. The electric current is supplied to the dimmer 3. However, when a dimmer shown in FIG. 2 is used in the LED illumination light source, because of the influence of a DC-DC converter or the like at a pre-stage of the dimmer, there is a state in which impedance is high. Therefore, in some case, a sufficient electric current is not supplied to the dimmer.

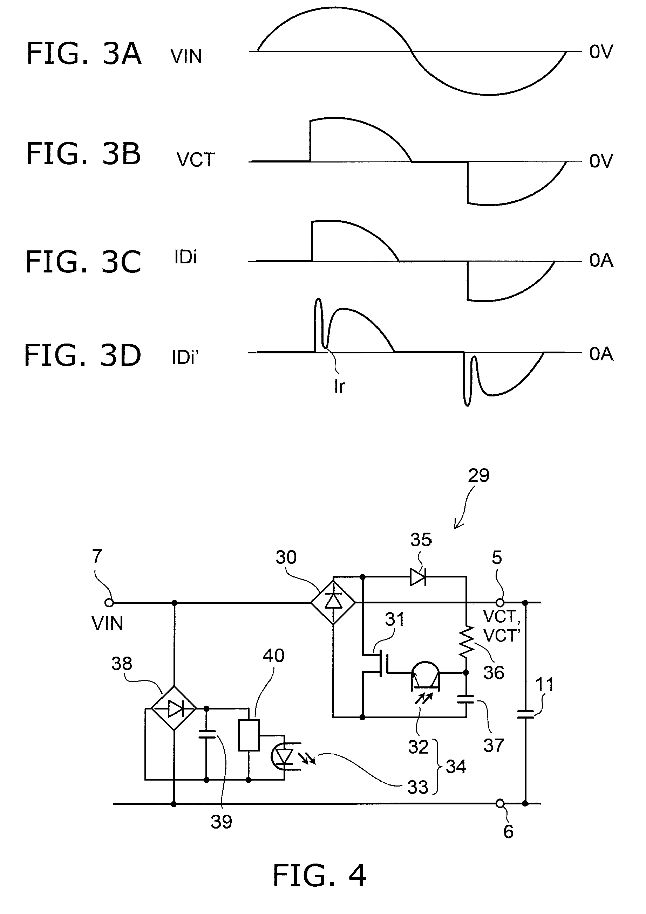

The other problems are described with reference to FIGS. 3A to 3D.

FIGS. 3A to 3D are waveform charts for describing the operation of the dimmer subjected to the phase control.

FIG. 3A is a waveform chart showing the alternating-current power supply voltage VIN. FIG. 3B is a waveform chart showing an output voltage VCT. FIG. 3C is a waveform chart showing the electric current IDi of the triac. FIG. 3D is a waveform chart showing an electric current IDi' of the triac.

As shown in FIG. 3A, an absolute value of the alternating-current power supply voltage VIN increases after a zero cross. As shown in FIG. 3B, the triac 12 conducts at predetermined timing determined by the time constant of the phase circuit 13. The triac 12 keeps an ON state until the power supply voltage VIN crosses zero next time. After the conduction of the triac 12, the output voltage VCT changes to a voltage substantially the same as the alternating-current power supply voltage VIN. The electric current IDi of the triac 12 corresponding to a load flows (FIGS. 3A to 3C).

Since the inductor 101 and the capacitor 100 are present, the electric current flowing through the triac 12 oscillates immediately after the triac 12 conducts. This state is indicated by the electric current IDi' of the triac 12 shown in FIG. 3D.

In general, a holing current is specified for a triac. This is a minimum current value for keeping a conduction state. When a value at a valley point Ir of the oscillating current in the electric current IDi' of the triac 12 shown in FIG. 3D falls below a holding current of the triac 12, the triac 12 is likely to change to non-conduction. That is, the triac 12 is likely to malfunction.

Measures against such a malfunction are as described below.

In the dimmer subjected to the phase control, electric power is supplied to the dimmer in a period of non-conduction. In order to prevent a malfunction immediately after conduction, an electric current for cancelling the valley point Ir of the electric current is fed to the dimmer. That is, it is necessary to feed a predetermined current through the dimmer immediately after the dimmer shifts from the non-conduction state to the conduction state.

The dimmer subjected to the anti-phase control is described.

FIG. 4 is a circuit diagram illustrating the dimmer subjected to the anti-phase control.

A dimmer 29 includes rectifier circuits 30 and 38, a semiconductor switch 31, a photo coupler 34, a diode 35, a resistor 36, capacitors 37 and 39, and a dimming control circuit 40.

The rectifier circuit 30 is inserted in series on one side of the pair of power supply lines. The semiconductor switch 31 is, for example, a MOSFET (Metal-Oxide-Semiconductor Field Effect Transistor) and is connected between a pair of output terminals of the rectifier circuit 30. The diode 35, the resistor 36, and the capacitor 37 connected in series are connected between a drain and a source of the semiconductor switch 31. These form a bias circuit configured to cause the semiconductor switch 31 to conduct. An anode of the diode 35 is connected to the drain of the semiconductor switch 31. A cathode of the diode 35 is connected to one end of the resistor 36. One end of the capacitor 37 is connected to the other end of the resistor 36. The other end of the capacitor 37 is connected to the source of the semiconductor switch 31.

The photo coupler 34 includes a light-receiving element 32 and a light-emitting element 33. The light-receiving element 32 is connected between a control terminal (a gate) of the semiconductor switch 31 and the capacitor 37 forming the bias circuit. When the light-receiving element 32 of the photo coupler 34 conducts, the voltage of the capacitor 37 is applied to the control terminal of the semiconductor switch 31.

The rectifier circuit 38 is connected to the pair of power supply lines in parallel. The dimming control circuit 40 is connected between a pair of output terminals of the rectifier circuit 38. The light-emitting element 33 of the photo coupler 34 is connected to an output of the dimming control circuit 40. The capacitor 39 is a smoothing capacitor and connected between the pair of output terminals of the rectifier circuit 38.

When the light-emitting element 33 emits light, a photocurrent flows to the light-receiving element 32 and the light-receiving element 32 conducts. The voltage of the capacitor 37 is applied to the control terminal of the semiconductor switch 31. As a result, the semiconductor switch 31 conducts and the dimmer 29 changes to a conduction state. When the light-emitting element 33 does not emit light, a photocurrent does not flow to the light-receiving element 32 and the light-receiving element 32 changes to a non-conduction state. As a result, the semiconductor switch 31 also becomes non-conductive and the dimmer 29 changes to the non-conduction state.

The dimming control circuit 40 adjusts timing for causing the light-emitting element 33 to emit light, performs phase control, and dims a luminaire, which is a load of the dimmer 29. As the dimming control circuit 40, for example, a microcomputer is used.

Problems that occur when the LED is used as the illumination light source are described.

A voltage for causing the semiconductor switch 31 to conduct is supplied from the capacitor 37. Therefore, it is necessary to charge the capacitor 37 in a period of the non-conduction of the semiconductor switch 31. That is, it is necessary to feed an electric current in the period. As in the case of the use of the dimmer subjected to the phase control, in some case, electric power is not supplied.

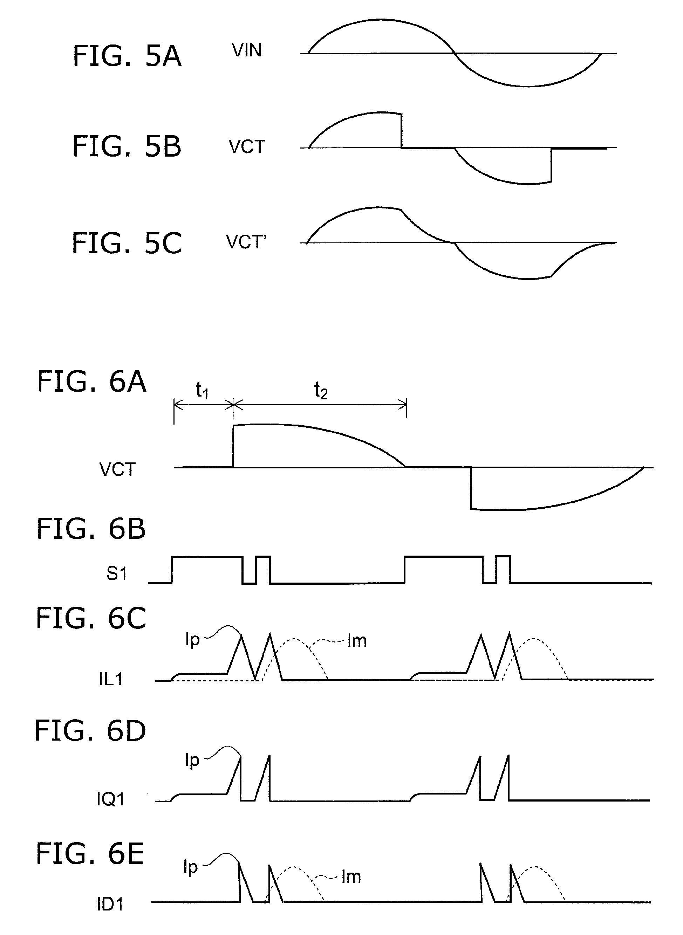

The other problems are described with reference to FIGS. 5A to 5C.

FIGS. 5A to 5C are waveform charts for describing the operation of the dimmer subjected to the anti-phase control.

In FIGS. 5A and 5B, a relation between the alternating-current power supply voltage VIN and the output voltage VCT is shown. The semiconductor switch 31 conducts immediately after the alternating-current power supply voltage VIN crosses zero and becomes non-conductive at predetermined timing. These operations of the semiconductor switch 31 are controlled by the dimming control circuit 40. Until the alternating-current power supply voltage VIN crosses zero next time, an output of the dimmer keeps a state in which the output is cut off from an input. At this point, the output voltage VCT immediately before the semiconductor switch 31 becomes non-conductive is charged in the input filter capacitor 11 connected between the input terminals 5 and 6. As in the dimmer subjected to the phase control, by connecting a high-impedance circuit to the dimmer, charges of the input filter capacitor 11 are not easily discharged and a voltage waveform is distorted. This state is indicated by an output voltage VCT' of FIG. 5C.

In the luminaire including the LED, it is also conceivable to provide a function of measuring a conduction angle of an alternating-current voltage waveforms output from the dimmer and adjusting a supply current to the LED light source according to the conduction angle. This function is provided to accurately reflect setting of brightness by the dimmer on the brightness of the LED light source. However, when the output voltage waveform of the dimmer is distorted, measurement of the conduction angle becomes inaccurate and the adjustment of the brightness of the LED light source also becomes inaccurate.

Measures against this problem are as described below.

In the dimmer subjected to the anti-phase control, as in the dimmer subjected to the phase control, an electric current of the dimmer is supplied in the non-conduction period. In order to prevent the distortion of the output voltage waveform of the dimmer, charges of the input filter capacitor 11 are rapidly discharged. In order to rapidly discharge the charges, it is necessary to feed a discharge current of the input filter capacitor 11 immediately after the dimmer shifts from the conduction state to the non-conduction state.

Referring back to FIG. 1, the explanation of the first embodiment is continued.

The switching circuit 17 includes an inductor 19, a switching element 21, a rectifying element 20, and a control circuit 22. The switching element 21 is, for example, a MOSFET. The rectifying element 20 is, for example, a silicon diode.

One end of the inductor 19 is connected to a high-potential output terminal 53 of the rectifier circuit 10. The other end of the inductor 19 is connected to a drain of the switching element 21. A source of the switching element 21 is connected to a low-potential output terminal 54 of the rectifier circuit 10. An anode of the rectifying element 20 is connected to the drain of the switching element 21. A cathode of the rectifying element 20 is connected to a high-potential output terminal 55 of the switching circuit 17. An output of the control circuit 22 is connected to a gate of the switching element 21. The low-potential output terminal 54 of the rectifier circuit 10 and the low-potential output terminal 56 of the switching circuit 17 are connected in common on the inside of the switching circuit 17.

The operation of the switching circuit 17 is described for each of the types of the dimmers.

First, an operation performed when the dimmer 28 subjected to the phase control shown in FIG. 2 is used as the dimmer 3 shown in FIG. 1 is described with reference to FIGS. 6A to 6E.

FIGS. 6A to 6E are waveform charts for describing the operation of the first embodiment performed when the dimmer 28 subjected to the phase control is used.

FIG. 6A is a waveform charts showing the output voltage VCT of the dimmer. FIG. 6B is a waveform chart showing a gate signal S1 of the switching element 21. FIG. 6C is a waveform chart showing an electric current IL1 of the inductor 19. FIG. 6D is a waveform chart showing a drain current IQ1 of the switching element 21. FIG. 6E is a waveform chart showing an electric current ID1 of the rectifying element 20.

In a period t1 of non-conduction of the dimmer 28, a signal is applied to the gate of the switching element 21. The switching element 21 changes to an ON state. The power supply current of the dimmer flows through the inductor 19 and the switching element 21.

When the dimmer 28 shifts to a period t2 in which the dimmer 28 conducts, the switching element 21 performs an ON/OFF operation for a short period, that is, switching. Since the dimmer 28 conducts, a normal alternating-current voltage is applied to the dimmer 28. A relatively large peak current Ip shown in FIGS. 6C and 6D flows to the inductor 19 and the switching element 21. An ON period of the switching element 21 is limited to a relatively short period such that the peak current Ip does not exceed a rated current of the switching element 21. When the switching element 21 is turned off, an electric current of the inductor 19 flows through the rectifying element 20 and a capacitor 23 provided in the DC-DC converter 18 at a post stage.

The valley point Ir of the dimmer 28 described with reference to FIGS. 3A to 3D is cancelled by the peak current Ip flowing at this point. In a specific example shown in FIGS. 6 A to 6E, the switching of the switching element 21 is performed twice. However, the embodiment is not limited to this. The switching may be performed a necessary number of times. The electric current flowing to the inductor 19 flows through the capacitor 23 in an OFF period of the switching element 21 and the capacitor 23 is charged. This charged power is used as input power of the DC-DC converter 18. That is, electric power consumed for dimmer malfunction prevention can be effectively used.

After the switching is performed a predetermined number of times, the switching element 21 keeps an OFF state in the remaining period of the period t2. An electric current Im shown in FIGS. 6C and 6E is an electric current not depending on the operation of the switching circuit 17 and is an original electric current of a power supply device fed through the DC-DC converter 18 and served for luminaire lighting.

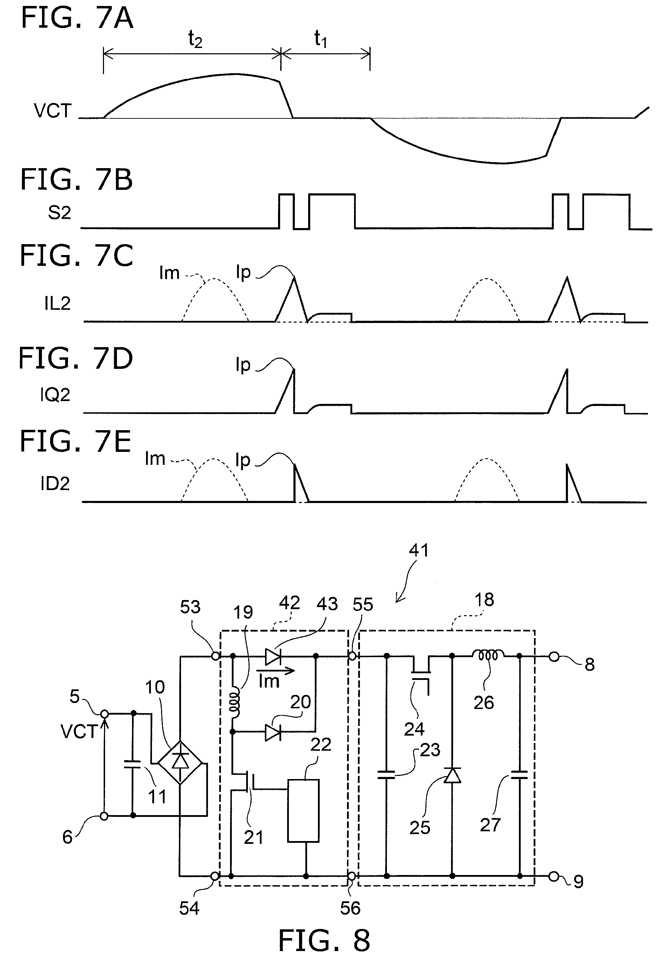

An operation performed when the dimmer 29 subjected to the anti-phase control shown in FIG. 4 is used as the dimmer 3 shown in FIG. 1 is described with reference to FIGS. 7A to 7E.

FIGS. 7A to 7E are waveform charts for describing the operation of the first embodiment performed when the dimmer 29 subjected to the anti-phase control is used.

FIG. 7A is a waveform chart showing the output voltage VCT of the dimmer. FIG. 7B is a waveform chart showing a gate signal S2 of the switching element 21. FIG. 7C is a waveform chart showing an electric current IL2 of the inductor 19. FIG. 7D is a waveform chart showing a drain current IQ2 of the switching element 21. FIG. 7E is a waveform chart showing an electric current ID2 of the rectifying element 20.

In the period t2, which is a period of a conduction state of the dimmer 29, the switching element 21 keeps the OFF state. Simultaneously with the dimmer 29 conducting and shifting to the period t1, the switching element 21 starts switching. The current Ip flows to the inductor 19 and the switching element 21. Charges of the input filter capacitor 11 are rapidly discharged. In a specific example shown in FIGS. 7A to 7E, the switching of the switching element 21 is performed once. However, the embodiment is not limited to this. The switching may be performed a necessary number of times. As in the case of the use of the dimmer subjected to the phase control, the electric current flowing to the inductor 19 flows through the capacitor 23 in the OFF period of the switching element 21 and effective use of electric power is attained.

After the switching is performed a predetermined number of times, the switching element 21 keeps the ON state in the remaining period of the period t1. As in the case of the use of the dimmer subjected to the phase control, an electric current of the dimmer 29 flows through the inductor 19 and the switching element 21. The electric current Im shown in FIGS. 7C and 7E is the same as the electric current Im shown in FIGS. 6C and 6E.

Irrespective of which of the dimmer subjected to the phase control and the dimmer subjected to the anti-phase control is used, the ON/OFF control of the switching element 21 is performed by the control circuit 22.

As it is evident from the above explanation, the switching circuit shown in FIG. 1 is a rising voltage type. However, the switching circuit in the embodiment may be a rising-falling type.

The DC-DC converter 18 shown in FIG. 1 includes the capacitor 23, a capacitor 27, a switching element 24, a rectifying element 25, an inductor 26, and a not-shown control circuit. The switching element 24 is, for example, a MOSFET. The rectifying element 25 is, for example, a silicon diode.

The capacitor 23 is connected to an output terminal of the switching circuit 17 in parallel. A drain of the switching element 24 is connected to the high-potential output terminal 55 of the switching circuit 17. A source of the switching element 24 is connected to a cathode of the rectifying element 25 and one end of the inductor 26. An anode of the rectifying element 25 is connected to the low-potential output terminal 56 of the switching circuit 17. The other end of the inductor 26 is connected to one end of the capacitor 27. The other end of the capacitor 27 is connected to the low-potential output terminal 56 of the switching circuit 17. An output of the DC-DC converter 18 is extracted from both the ends of the capacitor 27 and supplied to the lighting load 4.

The DC-DC converter 18 shown in the figure is a normal falling voltage converter. The switching element 24 is ON/OFF controlled and converts a voltage output from the switching circuit 17 into a voltage necessary for the lighting load 4. However, the embodiment is not limited to this. The DC-DC converter 18 may be a rising voltage type or a rising-falling type.

Effects of the first embodiment are described.

According to the embodiment, an effect is obtained that an electric current is fed and electric power is supplied to the dimmer in the non-conduction period of the dimmer. It is possible to surely recognize a conduction phase angle of the dimmer. When the dimmer of the phase control type is used, an effect is obtained that, when the dimmer shifts from the non-conduction state to the conduction state, a malfunction of the dimmer is prevented. When the dimmer of the anti-phase control type is used, when the dimmer shifts from the conduction state to the non-conduction state, charges of the input filter capacitor 11 are rapidly discharged. An effect is obtained that it is possible to prevent distortion of an output voltage waveform of the dimmer. The electric current fed to the dimmers is converted by the switching circuit 17 and supplied to the DC-DC converter at the post stage. An effect is also obtained that it is possible to effectively use electric power and save the electric power.

### Second Embodiment

FIG. 8 is a circuit diagram illustrating a power supply device according to a second embodiment.

A power supply device 41 includes the input filter capacitor 11, the rectifier circuit 10, a switching circuit 42, and the DC-DC converter 18.

The switching circuit 42 includes the inductor 19, the switching element 21, the rectifying element 20, a rectifying element 43, and the control circuit 22. The rectifying element 43 is, for example, a silicon diode.

An anode of the rectifying element 43 is connected to the high-potential output terminal 53 of the rectifier circuit 10. A cathode of the rectifying element 43 is connected to the high-potential output terminal 55. Otherwise, the switching circuit 42 can be configured the same as the switching circuit 17 shown in FIG. 1.

The operation of the switching element 21 in the switching circuit 42 is the same as the operation of the switching circuit 17 shown in FIG. 1. When the switching element 21 is turned on, a power supply current of a dimmer, a malfunction prevention current, and a discharge current of the input filter capacitor 11 flow through the inductor 19 and the switching element 21. When the switching element 21 is turned off, an electric current flowing to the inductor 19 flows to the capacitor 23 through the rectifying element 20 and charges the capacitor 23. On the other hand, the original electric current Im of the power supply device shown in FIGS. 7C and 7E flows through the rectifying element 43 not through the inductor 19. Since the relatively large current Im does not flow to the inductor 19, the inductor 19 can be an inductor of a low-saturation current type. In general, the inductor of the low-saturation current type is small.

Effects of the second embodiment are described.

According to the embodiment, as in the first embodiment, an effect is obtained that electric power is supplied to the dimmer in the non-conduction period of the dimmer. It is possible to surely recognize a conduction phase angle of the dimmer. When the dimmer of the phase control type is used, an effect is also obtained that a malfunction of the dimmer is prevented. When the dimmer of the anti-phase control type is used, an effect is also obtained that distortion of an output voltage waveform of the dimmer is prevented. An effect is also obtained that electric power can be saved by converting the electric current fed to the dimmers and supplying the electric current to the DC-DC converter. Besides, according to the second embodiment, an effect is also obtained that it is possible to reduce the size of the inductor 19.

### Third Embodiment

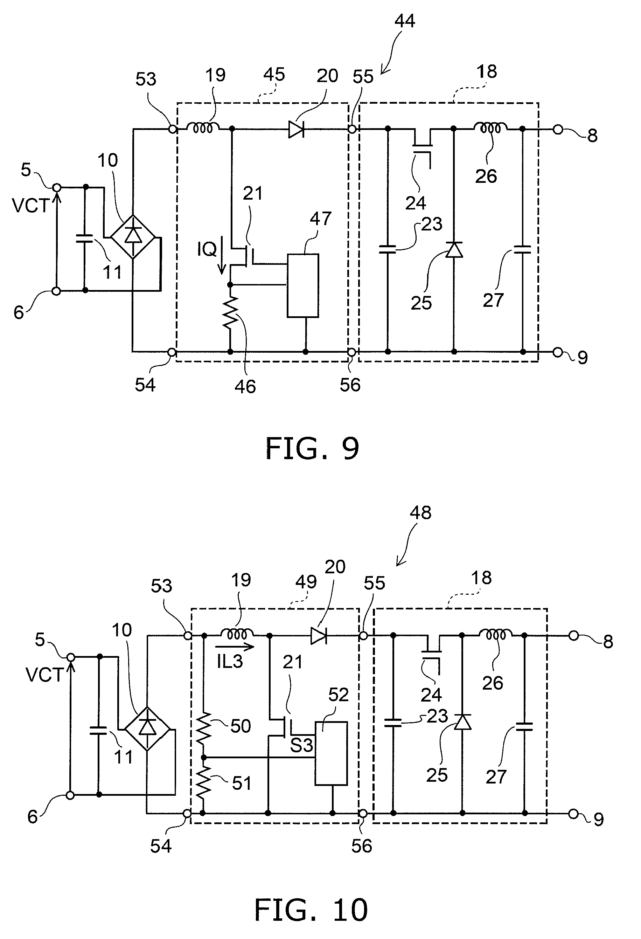

FIG. 9 is a circuit diagram illustrating a power supply device according to a third embodiment.

A power supply device 44 includes the input filter capacitor 11, the rectifier circuit 10, a switching circuit 45, and the DC-DC converter 18.

The switching circuit 45 includes the inductor 19, the switching element 21, the rectifying element 20, and a resistor 46 and a control circuit 47 configuring current detecting means.

The resistor 46 is connected between the source of the switching element 21 and the low-potential output terminal 54 of the rectifier circuit 10. The source of the switching element 21 is connected to an input terminal of the control circuit 47. Otherwise, the switching circuit 45 can be configured the same as the switching circuit 17 shown in FIG. 1.

In addition to the function of the control circuit 22, the control circuit 47 also has a function of detecting a drain current IQ of the switching element 21 by measuring a voltage at both ends of the resistor 46.

With this function, as described above with reference to FIGS. 6A to 6E, , the switching element 21 can be turned off before the peak current IP of the drain current IQ of the switching element 21 reaches a predetermined value, for example, the rated current of the switching element 21. As a result, it is possible to prevent breakage of the switching element 21.

Effects of the third embodiment are described.

According to the embodiment, as in the first embodiment, an effect is obtained that electric power is supplied to the dimmer in the non-conduction period of the dimmer. It is possible to surely recognize a conduction phase angle of the dimmer. When the dimmer of the phase control type is used, an effect is also obtained that a malfunction of the dimmer is prevented. When the dimmer of the anti-phase control type is used, an effect is also obtained that distortion of an output voltage waveform of the dimmer is prevented. An effect is also obtained that electric power can be saved by converting the electric current fed to the dimmers and supplying the electric current to the DC-DC converter. Besides, according to the third embodiment, an effect is also obtained that it is possible to prevent breakage of the switching element 21 and provide a highly reliable power supply circuit.

### Fourth Embodiment

FIG. 10 is a circuit diagram illustrating a power supply device according to a fourth embodiment.

A power supply device 48 shown in FIG. 10 includes the input filter capacitor 11, the rectifier circuit 10, a switching circuit 49, and the DC-DC converter 18.

The switching circuit 49 includes the inductor 19, the switching element 21, the rectifying element 20, and resistors 50 and 51 and a control circuit 52 configuring input voltage detecting means.

The resistors 50 and 51 connected in series are connected between the high-potential output terminal 53 and the low-potential output terminal 54 of the rectifier circuit 10. A connection point of the resistor 50 and the resistor 51 is connected to an input terminal of the control circuit 52. Voltages obtained by dividing an input voltage with the resistors 50 and 51 are input to the control circuit 52. Otherwise, the switching circuit 49 can be configured the same as the switching circuit 17 shown in FIG. 1.

Besides the function of the control circuit 22, the control circuit 52 also has a function of, when the dimmer is the anti-phase control type, predicting a period when the dimmer becomes non-conductive and starting the switching operation of the switching element 21 before the dimmer becomes non-conductive. In the embodiment, a waveform of a dimmer output voltage is monitored by the input voltage detecting means described above. The control circuit 52 determines whether the dimmer is the anti-phase type and measurement of a dimmer conduction period, predicts a period when the dimmer becomes non-conductive next time, and drives the switching element 21.

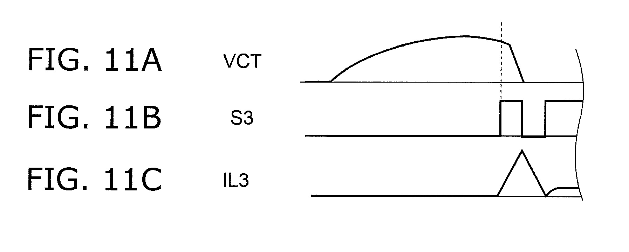

An operation performed when the dimmer 29 subjected to the anti-phase control shown in FIG. 4 is used in the power supply device 48 shown in FIG. 10 is described with reference to FIGS. 11A to 11C.

FIGS. 11A to 11C are waveform charts for describing the operation of the power supply device 48 in the fourth embodiment performed when the dimmer 29 subjected to the anti-phase control is used.

FIG. 11A is a waveform chart showing the output voltage VCT of the dimmer. FIG. 11B is a waveform chart showing a gate signal S3 of the switching element 21. FIG. 11C is a waveform chart showing an electric current IL3 of the inductor 19.

As shown in FIGS. 11A to 11C, the gate signal 3 is output before the dimmer 29 becomes non-conductive and the output voltage VCT starts to fall. The switching element 21 is turned on at timing earlier than the timing in the embodiment shown in FIG. 1. The electric current IL3 can rise earlier and rapidly reduce the voltage of the output voltage VCT. In this way, it is possible to rapidly discharge the voltage of the input filter capacitor 11.

Effects of the fourth embodiment are described.

As in the first embodiment, an effect is obtained that electric power is supplied to the dimmer in the non-conduction period of the dimmer. It is possible to surely recognize a conduction phase angle of the dimmer. When the dimmer of the phase control type is used, an effect is also obtained that a malfunction of the dimmer is prevented. When the dimmer of the anti-phase control type is used, an effect is also obtained that distortion of an output voltage waveform of the dimmer is prevented. An effect is also obtained that electric power can be saved by converting the electric current fed to the dimmer and supplying the electric current to the DC-DC converter. Besides, according to the fourth embodiment, an effect is also obtained that it is possible to further prevent distortion of the dimmer output voltage waveform than the first embodiment by rapidly discharging a voltage charged in the input filter.

The embodiments are described above with reference to the specific examples. However, the embodiments are not limited to the specific examples and various modifications of the embodiments are possible.

For example, the switching circuit or the switching element of the DC-DC converter may be a GaN-based HEMT. For example, the switching circuit or the switching element may be a semiconductor element formed by using a semiconductor having a wide band gap (a wide band gap semiconductor) such as silicon carbide (SiC), gallium nitride (GaN), or diamond as a semiconductor substrate. The wide band gap semiconductor means a semiconductor having a band gap wide than a band gap of gallium arsenide (GaAs) having the band gap of about 1.4 eV. The wide band gap semiconductor includes, for example, a semiconductor having a band gap equal to or wider than 1.5 eV, gallium phosphate (GaP having band gap of about 2.3 eV), gallium nitride (GaN having a band gap of about 3.4 eV), diamond (C having a band gap of about 5.27 eV), aluminum nitride (AIN having a band gap of about 5.9 eV), and silicon carbide (SiC).

The lighting load 4 is not limited to LED and may be, for example, an organic EL (Electro-Luminescence) or an OLED (Organic light-emitting diode). A plurality of the illumination light sources 16 may be connected to the lighting load 4 in series or in parallel.

The embodiments are described above with reference to the specific examples.

However, the embodiments are not limited to the specific examples. That is, examples obtained by those skilled in the art applying design changes to the specific examples are also included in the scope of the embodiments as long as the examples include the characteristics of the embodiments. The components and the arrangement, the materials, the conditions, the shapes, the sizes, and the like of the components included in the specific examples are not limited to those illustrated in the figures and can be changed as appropriate.

The components included in the embodiments can be combined as long as the combination is technically possible. Components obtained by combining the components are also included in the scope of the embodiments as long as the components include the characteristics of the embodiments. Besides, in the category of the idea of the embodiments, those skilled in the art can conceive various modifications and alterations. It is understood that the modifications and the alternations also belong to the scope of the embodiments.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power supply device (1, 41, 44, 48) comprising:
a terminal (5) connected to an output side of a dimmer (3, 28, 29) connected to an alternating-current power supply (2);
a rectifier circuit (10);
a switching circuit (17, 42, 45, 49) including an inductor (19), a switching element (21) connected to the inductor (19) in series, and a rectifying element (20), one end of the first rectifying element being connected between the inductor (19) and the switching element (21), the switching circuit configured to change the switching element (21) to an ON state to feed an output current of the rectifier circuit (10) to the inductor (19), after the dimmer (3, 28) changes from a non-conduction state to a conduction state, when the dimmer (3, 28, 29) is a dimmer (3, 28) of a phase control type, and the switching circuit configured to change the switching element (21) to the ON state to feed the output current of the rectifier circuit (10) to the inductor (19), after the dimmer (3, 29) changes from the conduction state to the non-conduction state, when the dimmer (3, 28, 29) is a dimmer (3, 29) of an anti-phase control type; and
a DC-DC converter (18) configured to convert the output voltage of the switching circuit (17, 42, 45, 49).

2. The device (1, 41, 44, 48) according to claim 1, wherein the switching circuit (17, 42, 45, 49) turns off the switching element (21) when a predetermined current flows to the switching element (21).

3. The device (1, 41, 44, 48) according to claim 1, wherein, when the dimmer (3, 28, 29) is the dimmer (3, 29) of the anti-phase control type, the switching circuit (17, 42, 45, 49) turns on the switching element (21) before the dimmer (3, 29) changes to the non-conduction state.

4. A luminaire (1000) comprising:
the power supply device (1, 41, 44, 48) according to any one of claims 1 to 3; and
a lighting load (4) supplied with electric power from the power supply device (1, 41, 44, 48).

5. A lighting system comprising:
the luminaire (1000) according to claim 4; and
a dimmer (3, 28, 29) configured to supply a phase-controlled alternating-current voltage to the power supply device (1, 41, 44, 48).
